# EUROPÄISCHE PATENTANMELDUNG

(11) **EP 4 303 449 A1**
(43) Veröffentlichungstag der Anmeldung: **10.01.2024**
(21) Anmeldenummer: 23180918.7
(22) Anmeldetag: 22.06.2023
(51) Int. Cl.: F04D 29/32, F04D 19/02, F04D 29/54

(54) **VERDICHTER FÜR EIN TRIEBWERK**

(30) Priorität: 04.07.2022 DE 102022116667
(71) Anmelder: MTU Aero Engines AG, 80995 München (DE)
(72) Erfinder: Elorza Gomez, Sergio, 80995 München (DE); Humhauser, Werner, 80995 München (DE); Matzgeller, Roland, 80995 München (DE)

(57) **Zusammenfassung**

Die Erfindung betrifft einen Verdichter (12) für ein Triebwerk (10), wobei der Verdichter (12) in einer Strömungsrichtung (R) des Verdichters (12) aufeinanderfolgend angeordnete Verdichterstufen (15) aufweist und eine Verdichterstufe (15) jeweils ein Laufschaufelgitter (16) und ein stromabwärts von dem Laufschaufelgitter (16) angeordnetes Leitschaufelgitter (17) aufweist und die Laufschaufelgitter (16) und die Leitschaufelgitter (17) jeweils ein Seitenverhältnis (V) aufweisen.

## Beschreibung

Die Erfindung betrifft einen Verdichter für ein Triebwerk, wobei der Verdichter in einer Strömungsrichtung des Verdichters aufeinanderfolgend angeordnete Verdichterstufen aufweist und eine Verdichterstufe jeweils ein Laufschaufelgitter und ein stromabwärts von dem Laufschaufelgitter angeordnetes Leitschaufelgitter aufweist und die Laufschaufelgitter und die Leitschaufelgitter jeweils ein Seitenverhältnis einer mittleren Höhe zu einer mittleren Sehnenlänge einer Schaufel aufweisen.

Es bestehen Bestrebungen, das Flugtriebwerke weniger Kraftstoff verbrauchen, weniger Emissionen ausstoßen und zudem auch leiser werden sollen. Hierzu wird beispielsweise angestrebt, den thermischen Wirkungsgrad des Triebwerks zu erhöhen, indem das Gesamtdruckverhältnis (OPR) des Verdichters erhöht wird, um einen Kraftstoffverbrauch zu verringern. Eine damit verbundene Erhöhung der Temperaturen im Verdichter verlangt nach aerodynamisch langsamer drehenden Verdichtern, was wiederum mehr Verdichterstufen erfordert, um eine ausreichende Lebensdauer für Triebwerkskomponenten zu ermöglichen, insbesondere für Komponenten in einem stromabwärts angeordneten Verdichteraustrittsbereich. Dies kann beispielsweise durch Erhöhen der Anzahl der Verdichterstufen erreicht werden. Dabei sollte gleichzeitig eine Längenänderung bzw. eine Längenzunahme des Verdichters vermieden oder zumindest gering gehalten werden, um eine Gesamtlänge des Triebwerks in einem akzeptablen Rahmen zu halten.

Das Seitenverhältnis, also das Verhältnis einer mittleren Schaufelhöhe zu einer mittleren Sehnenlänge von Schaufeln von Axialverdichtergittern ist ein entscheidender Faktor bei der Verdichterauslegung. Die Auswahl hoher Seitenverhältnisse ermöglicht kurze Verdichterbaulängen, ist aber mit Performance- und Stabilitätsverlusten verbunden. Bekannte niedrigbelastete Verdichter haben oft hohe Seitenverhältnisse über alle Schaufelgitter. Moderne hochbelastete Verdichter dagegen benötigen Schaufelgitter mit niedrigen Seitenverhältnissen, was jedoch zu größeren Verdichterlängen führt.

Hiervon ausgehend ist es eine Aufgabe der vorliegenden Erfindung, einen Verdichter für ein Triebwerk zur Verfügung zu stellen, welcher insbesondere ein hohes Gesamtdruckverhältnis ermöglicht, ohne die Verdichterbauteile thermisch zu stark zu belasten. Dies wird erfindungsgemäß durch die Lehre der unabhängigen Ansprüche erreicht. Vorteilhafte Ausführungen der Erfindung sind Gegenstand der Unteransprüche.

Zur Lösung der Aufgabe wird ein Verdichter für ein Triebwerk, insbesondere ein Flugtriebwerk, vorgeschlagen, wobei der Verdichter in einer Strömungsrichtung des Verdichters aufeinanderfolgend angeordnete Verdichterstufen aufweist und eine Verdichterstufe jeweils ein Laufschaufelgitter und ein stromabwärts von dem Laufschaufelgitter angeordnetes Leitschaufelgitter aufweist und die Laufschaufelgitter und die Leitschaufelgitter jeweils ein Seitenverhältnis einer mittleren Höhe zu einer mittleren Sehnenlänge einer Schaufel aufweisen. Dabei sind die Verdichterstufen derart ausgebildet, dass (a) ein Wert eines Verhältnisses zwischen dem Seitenverhältnis des zweiten Laufschaufelgitters und dem Seitenverhältnis des vorletzten Leitschaufelgitters größer als 2,0 ist und/oder (b) ein Wert eines Verhältnisses zwischen dem Seitenverhältnis des zweiten Laufschaufelgitters und dem Seitenverhältnis des letzten Laufschaufelgitters größer als 2,0 ist und/oder (c) ein Wert eines Verhältnisses zwischen dem Seitenverhältnis des ersten Leitschaufelgitters und dem Seitenverhältnis des vorletzten Leitschaufelgitters größer als 2,8 ist.

Dies ermöglicht es, den Verdichter, insbesondere unter Einhaltung vorgegebener Rahmenbedingungen, wie beispielsweise eine vorbestimmte Strömungskanalhöhe des Verdichters des Triebwerks oder eine vorbestimmte Höchstlänge des Verdichters bzw. des Triebwerks, zu verbessern. Gegenüber bekannten Verdichtern können die Laufschaufelgitter und/oder die Leitschaufelgitter der Verdichterstufen derart aufeinander abgestimmt ausgestaltet bzw. ausgelegt werden, dass ein Gesamtdruckverhältnis des Verdichters gegenüber bekannten Verdichtern, insbesondere ohne Stabilitätsverluste, erhöht werden kann. Insbesondere können auch zusätzliche Verdichterstufen ohne oder mit nur geringer Erhöhung der Verdichterlänge vorgesehen werden. Das Gesamtdruckverhältnis bzw. Gesamtkompressionsverhältnis ist hierbei insbesondere das Verhältnis des Staudrucks, gemessen an einer stromaufwärtigen Eintrittsseite und einer stromabwärtigen Austrittsseite des Verdichters des Triebwerks.

Der Verdichter ist insbesondere ein Verdichter eines Flugtriebwerks, welches typischerweise neben dem Verdichter einen Fan, eine Brennkammer und eine Turbine aufweist. Beispielsweise kann das Triebwerk als Mantelstromtriebwerk ausgebildet sein. Durch den Fan wird Umgebungsluft als Arbeitsfluid angesaugt und zur, insbesondere in Strömungsrichtung fortschreitenden, Druckerhöhung im Verdichter komprimiert werden. In der in Strömungsrichtung des Triebwerks nach dem Verdichter angeordneten Brennkammer wird das komprimierte Arbeitsfluid üblicherweise mit einem Brennstoff vermischt und diese Mischung verbrannt, um Verbrennungsgase mit hohem Druck und hoher Temperatur zu erzeugen. Die Verbrennungsgase strömen von der Brennkammer in die Turbine, wo sie sich ausdehnen und dabei Energie abgeben. Durch die Expansion der Verbrennungsgase kann im Turbinenabschnitt eine Rotorwelle angetrieben werden, die beispielsweise (auch) mit einem Generator verbunden ist, um elektrische Energie zu erzeugen. Im Anschluss an die Turbine können die Verbrennungsgase das Triebwerk über einen Abgasauslass verlassen.

Der Verdichter weist eine Anzahl an Verdichterstufen auf, die innerhalb eines, insbesondere sich in Strömungsrichtung verjüngenden, Strömungskanals des Triebwerks bzw. des Stroms der Verbrennungsgase positioniert sind. Dabei weisen die Verdichterstufen eine an einen Strömungskanal des Triebwerks angepasste, sich in der Strömungsrichtung verjüngende Geometrie auf, um eine Kompression des Arbeitsfluids zu erreichen. Jede der Verdichterstufen weist dabei einen um eine Triebwerksachse bzw. Rotationsachse des Triebwerks drehbaren Rotor auf, an welchem üblicherweise mehrere Laufschaufelgitter angeordnet sind, denen nachgelagert jeweils stromabwärts feststehende Statoren bzw. Leitschaufelgitter angeordnet sind. Dabei weisen die Laufschaufelgitter und Leitschaufelgitter je eine Mehrzahl an, insbesondere aerodynamisch gekrümmten, jeweils identisch ausgebildeten Schaufeln auf. Die Schaufeln sind radial in dem Strömungskanal des Verdichters angeordnet und erstrecken sich zwischen einem Schaufelfuß und einer Schaufelspitze jeweils zwischen einer Vorderkante und einer Hinterkante entlang der Strömungsrichtung. Zwischen der Vorderkante und der Hinterkante erstreckt sich an einer Seite der Schaufel eine Saugseite und an der anderen Seite eine Druckseite, welche einander gegenüberliegend angeordnet sind. Die Schaufeln bzw. die jeweiligen Laufschaufelgitter bzw. Leitschaufelgitter sind durch ein Seitenverhältnis charakterisiert, wobei das Seitenverhältnis ein Verhältnis einer mittleren Schaufelhöhe zwischen Schaufelfuß und Schaufelspitze zu einer mittleren Sehnenlänge eines Schaufelquerschnitts der jeweiligen Schaufel(n) ist.

Die mittlere Schaufelhöhe h ist dabei insbesondere das arithmetische Mittel aller Schaufelhöhen zwischen der Vorderkante und der Hinterkante bzw. das Integral der Schaufelhöhe im Intervall zwischen der Vorderkante und der Hinterkante einer Schaufel. Die mittlere Sehnenlänge bzw. die mittlere Länge der Sehne ist insbesondere das arithmetische Mittel aller Sehnenlängen zwischen der Schaufelspitze und dem Schaufelfuß bzw. das Integral der Sehnenlänge im Intervall zwischen der Schaufelspitze und dem Schaufelfuß einer Schaufel wobei die Sehnenlänge die kürzeste Verbindungslinie zwischen der Vorderkante und der Hinterkante der jeweiligen Schaufel in einem Schaufelquerschnitt ist. Der Schaufelquerschnitt steht dabei insbesondere senkrecht auf einer Radialen der Triebwerks- bzw. Verdichterachse.

Die erste Verdichterstufe ist eine stromaufwärtigste Verdichterstufe an der Eintrittsseite des Verdichters bzw. die in Strömungsrichtung erste Stufe des Verdichters, das erste Leitschaufelgitter entsprechend das stromaufwärtigste Leitschaufelgitter bzw. das in Strömungsrichtung erste Leitschaufelgitter von insbesondere mehreren in Strömungsrichtung des Verdichters axial hintereinander angeordneten Leitschaufelgittern des Verdichters. Dieses erste Leitschaufelgitter ist dabei insbesondere das Eintrittsleitrad des Verdichters.

Die zweite Verdichterstufe ist eine stromabwärts benachbart zur ersten Verdichterstufe angeordnete Verdichterstufe bzw. die in Strömungsrichtung zweite Stufe des Verdichters. Das zweite Laufschaufelgitter ist entsprechend ein stromabwärts des ersten Laufschaufelgitters angeordnetes bzw. in Strömungsrichtung zweites Laufschaufelgitter von insbesondere mehreren in Strömungsrichtung des Verdichters axial hintereinander angeordneten Laufschaufelgittern des Verdichters. Dieses zweite Laufschaufelgitter ist dabei insbesondere stromabwärts benachbart zu dem Eintrittsleitschaufelgitter des Verdichters angeordnet.

Die letzte Verdichterstufe ist eine stromabwärtigste bzw. in Strömungsrichtung letzte Stufe des Verdichters, das letzte Laufschaufelgitter entsprechend ein stromabwärtigstes bzw. in Strömungsrichtung letztes von insbesondere mehreren in Strömungsrichtung des Verdichters axial hintereinander angeordneten Laufschaufelgittern des Verdichters.

Die vorletzte Verdichterstufe ist eine zu der stromabwärtigst angeordneten bzw. in Strömungsrichtung letzten Stufe des Verdichters stromaufwärts benachbart angeordnete Verdichterstufe. Das vorletzte Leitschaufelgitter ist entsprechend ein zu dem stromabwärtigst angeordneten bzw. in Durchströmungsrichtung letzten Leitschaufelgitter bzw. einem Austrittsleitgitter stromaufwärts angeordnetes Leitschaufelgitter von insbesondere mehreren in Strömungsrichtung des Verdichters axial angeordneten Leitschaufelgittern.

Die Erfindung beruht unter anderem auf der Idee, gegenüber bekannten Verdichtern, die Seitenverhältnisse der vorderen bis mittleren Verdichterstufen bzw. Schaufelgitter zu erhöhen und/oder die Seitenverhältnisse der hinteren Schaufelgitter zu verringern, um das Gesamtdruckverhältnis des Verdichters zu erhöhen und gleichzeitig eine Längenänderung des Verdichters, welche sich insbesondere durch ein Vorsehen zusätzlicher Verdichterstufen ergibt, zu reduzieren. Auf diese Weise ist eine reduzierte thermische Belastung der Verdichterbauteile erreichbar.

Da die im vorderen bzw. stromaufwärtigen Bereich des Verdichters angeordneten Verdichterstufen bzw. Laufschaufelgitter und/oder Leitschaufelgitter jeweils eine größere radiale Ausdehnung aufweisen als stromabwärts angeordnete Verdichterstufen bzw. Laufschaufelgitter und/oder Leitschaufelgitter, kann durch eine Erhöhung des Seitenverhältnisses der vorderen bzw. stromaufwärtigen Schaufeln bzw. Schaufelgitter, also einer Vergrößerung der Schaufelhöhe und/ oder einer Verschlankung der Schaufelbreite bzw. Verkürzung der Schaufelsehne, eine Längeneinsparung für den Verdichter erzielt werden. Die stromabwärts angeordneten Verdichterstufen bzw. Laufschaufelgitter und/oder Leitschaufelgitter weisen jeweils eine geringere radiale Ausdehnung auf und tragen durch eine Reduktion ihres Seitenverhältnisses, also einer Verringerung der Schaufelhöhe und/oder einer Verbreiterung der Schaufel bzw. einer Ausweitung der mittleren Schaufelsehne zu einer Betriebsstabilisierung bei, wobei sich hieraus nur eine geringe Erhöhung der Verdichterlänge ergibt.

Das vorgeschlagene Verdichter ermöglicht die Kombination dieser beiden Maßnahmen, nämlich des Vergrößerns des Seitenverhältnisses für stromaufwärts angeordnete Verdichterstufen bzw. des Reduzierens des Seitenverhältnisses für stromabwärts angeordnete Verdichterstufen, wodurch eine kompakte und thermisch günstige Verdichterbauweise erreicht werden kann.

Bei dem erfindungsgemäßen Verdichter ist der Wert des Verhältnisses zwischen dem Seitenverhältnis des zweiten Laufschaufelgitters und dem Seitenverhältnis des vorletzten Leitschaufelgitters und/oder der Wert des Verhältnisses zwischen dem Seitenverhältnis des zweiten Laufschaufelgitters und dem Seitenverhältnis des letzten Laufschaufelgitters größer als 2,2, und insbesondere größer als 2,25. Dadurch, dass das Seitenverhältnis des zweiten Laufschaufelgitters als eine relevante Größe für die Auslegung des Verdichters herangezogen wird, ist eine Größe und/oder Ausgestaltung des ersten Laufschaufelgitters der ersten Verdichterstufe insbesondere frei gestaltbar, um beispielsweise besonderen Bedingungen in Bezug auf Beschädigungen durch Fremdkörper bzw. Foreign Object Damage (FOD) zu genügen.

Bei einer Ausführungsform des Verdichters ist der Wert des Verhältnisses zwischen dem Seitenverhältnis des ersten Leitschaufelgitters und dem Seitenverhältnis des vorletzten Leitschaufelgitters größer als 3,0 und insbesondere größer als 3,05. Dadurch, dass das Seitenverhältnis des vorletzten Leitschaufelgitters als eine relevante Größe für die Auslegung des Verdichters herangezogen wird, kann eine Größe und/oder Ausgestaltung des Leitschaufelgitters der letzten Verdichterstufe, insbesondere des Austrittleitrads, frei gestaltbar sein, um beispielsweise besonderen Bedingungen in Bezug auf eine Strömungsführung genügen zu können.

Bei einer Ausführungsform wird eine Anzahl an in einer Strömungsrichtung des Verdichters aufeinanderfolgend anzuordnenden Verdichterstufen bestimmt. Hierbei kann die Anzahl der Verdichterstufen vorgegeben sein und in Abhängigkeit von dieser Anzahl an Verdichterstufen kann das Triebwerk mittels wenigstens eines der oben beschriebenen Kriterien a) bis c) ausgelegt werden, um eine Steigerung des Gesamtdruckverhältnisses zu ermöglichen. In einer alternativen Ausführungsform kann ein Gesamtdruckverhältnis bestimmt bzw. festgelegt sein und die Anzahl der Verdichterstufen darauf basierend bestimmt werden.

Zusammengefasst wird ein Verdichter für ein Triebwerk vorgeschlagen, welcher in einer Strömungsrichtung des Verdichters aufeinanderfolgend angeordnete Verdichterstufen aufweist und eine Verdichterstufe jeweils ein Laufschaufelgitter und ein stromabwärts von dem Laufschaufelgitter angeordnetes Leitschaufelgitter aufweist, wobei die Laufschaufelgitter und die Leitschaufelgitter jeweils ein Seitenverhältnis aufweisen, wie oben beschriebenen. Mittels einer derartigen Gestaltung kann das Gesamtdruckverhältnis (OPR) des Verdichters erhöht werden, wobei der thermische Wirkungsgrad des Triebwerks erhöht und der Kraftstoffverbrauch verringert werden kann. Gegenüber bekannten Verdichtern kann eine höhere Zahl von Verdichterstufen vorgesehen werden, wobei eine Längenzunahme insbesondere des Verdichters und somit des Triebwerks vermieden oder zumindest gering gehalten werden kann, um insbesondere eine maximale Gesamtlänge des Triebwerks nicht zu überschreiten.

Bei einer Ausführungsform weist der Verdichter einen Hochdruckverdichter auf oder ist als Hochdruckverdichter ausgebildet. Hierbei finden die im Zusammenhang mit der Erfindung beschriebenen Merkmale und Vorteile Anwendung auf den Hochdruckverdichter, dessen Hochdruckverdichterstufen sowie dessen Laufschaufelgitter bzw. Leitschaufelgitter und dessen Gesamtdruckverhältnis oder des Gesamtdruckverhältnis des Verdichters.

Weitere Merkmale, Vorteile und Anwendungsmöglichkeiten der Erfindung ergeben sich aus der nachfolgenden Beschreibung im Zusammenhang mit den Figuren. Im Allgemeinen gilt, dass Merkmale der verschiedenen hierin beschriebenen beispielhaften Aspekte und/oder Ausführungsformen miteinander kombiniert werden können, sofern dies im Zusammenhang mit der Offenbarung nicht eindeutig ausgeschlossen ist.

Im folgenden Teil der Beschreibung wird auf die Figuren Bezug genommen, die zur Veranschaulichung spezifischer Aspekte und Ausführungsformen der vorliegenden Erfindung gezeigt sind. Es versteht sich, dass auch andere Aspekte verwendet werden können und strukturelle oder logische Änderungen der illustrierten Ausführungsformen möglich sind, ohne den Umfang der vorliegenden Erfindung zu verlassen. Die folgende Beschreibung der Figuren ist daher nicht einschränkend zu verstehen. Es zeigt
- Fig. 1: eine schematische Darstellung eines beispielhaften Triebwerks;
- Fig. 2: eine schematische Darstellung einer beispielhaften Schaufel eines Schaufelgitters für einen erfindungsgemäßen Verdichter;
- Fig. 3: eine schematische Darstellung eines Ablaufdiagramms eines Verfahrens zum Auslegen eines Verdichters für ein Triebwerk;
- Fig. 4: ein Diagramm eines beispielhaften Verlaufs eines Laufschaufelseitenverhältnisses über eine Verdichterbeschaufelung eines erfindungsgemäßen Verdichters; und
- Fig. 5: ein Diagramm eines beispielhaften Verlaufs eines Leitschaufelseitenverhältnisses über eine Verdichterbeschaufelung eines erfindungsgemäßen Verdichters.

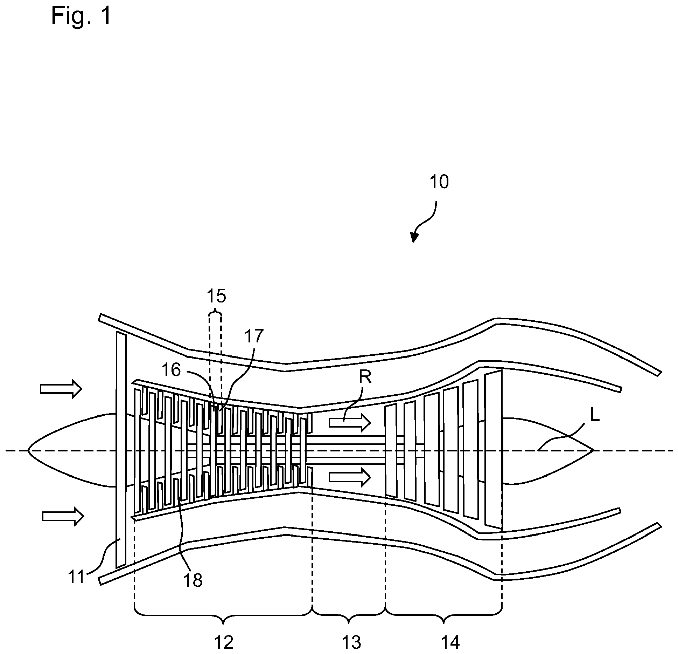

**Fig. 1** zeigt eine beispielhafte Darstellung eines Ausführungsbeispiels eines Triebwerks 10, welches einen erfindungsgemäßen Verdichter 12 aufweist, in einer schematischen Schnittansicht.

Das Triebwerk 10 bzw. die Strömungsmaschine weist in Strömungsrichtung R aufeinanderfolgend angeordnet einen Fan 11, einen Verdichter 12, eine Brennkammer 13 und eine Turbine 14 auf. Der Verdichter 12 ist aus mehreren Verdichterstufen 15 aufgebaut, wobei jede Verdichterstufe 15 ein Laufschaufelgitter 16 und ein in Strömungsrichtung R darauffolgend angeordnetes Leitschaufelgitter 17 aufweist. Eine solche Verdichterstufe 15, insbesondere eine Hochdruckverdichterstufe, weist jeweils ein Laufschaufelgitter 16 und ein in Strömungsrichtung R nachfolgend zu dem Laufschaufelgitter 16 angeordnetes Leitschaufelgitter 17 auf und kann mittels des erfindungsgemäßen Verfahrens zum Auslegen eines Verdichters 12 für ein Triebwerk 10 dimensioniert bzw. ausgelegt werden bzw. worden sein. Die Laufschaufelgitter 16 und die Leitschaufelgitter 17 weisen jeweils ein Seitenverhältnis V einer mittleren Höhe h zu einer mittleren Sehnenlänge S einer Schaufel 20 auf.

Die Laufschaufelgitter 16 rotieren im Betrieb des Verdichters 12 um die Drehachse L des Triebwerks 10, wobei die Leitschaufelgitter 17 stationär angeordnet sind. Im Verdichter 12 wird die mittels des Fans 11 angesaugte Luft komprimiert, und dann in der nachgelagerten Brennkammer 13 mit hinzugemischtem Brennstoff verbrannt. Die hierdurch entstehende energiereiche Strömung durchströmt die Turbine 14 und treibt dabei die dort angeordneten Laufschaufelanordnungen an.

Dabei weist das Laufschaufelgitter 16 und das Leitschaufelgitter 17 jeweils eine Mehrzahl an, nicht dargestellten, Schaufeln 20 auf, die sich bezogen auf eine Drehachse L des Triebwerks 10 radial in einem Strömungskanal 18 des Triebwerks 10 erstrecken.

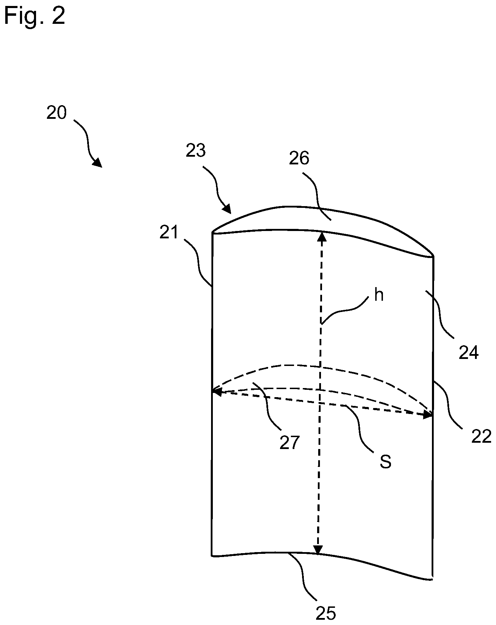

**Fig. 2** zeigt eine schematische Darstellung einer beispielhaften Schaufel 20 eines Verdichters 12 des Ausführungsbeispiels eines beispielhaften Triebwerks 10 aus Fig. 1. Die Darstellung der Schaufel 20 ist hierbei rein illustrativ zu verstehen und kann eine Schaufel 20 eines Laufschaufelgitters 16 oder eines Leitschaufelgitters 17 sein.

Die Schaufel 20 weist eine Vorderkante 21 und eine Hinterkante 22 auf, welche durch eine Saugseite 23 und eine Druckseite 24 miteinander verbunden sind. Die kürzeste Verbindungslinie zwischen der Vorderkante 21 und der Hinterkante 22 in jeweils einem senkrecht zu einer Radialen der Triebwerksachse L angeordneten Schaufelquerschnitt 27 bildet eine Sehne S. Das Schaufelblatt 20 erstreckt sich in radialer Richtung bezogen auf die Triebwerksachse L über eine Schaufelhöhe h von einem Schaufelfuß 25 bis zu einer Schaufelspitze 26. Die Schaufelhöhe h wird im Wesentlichen parallel zu einer Radialen der Triebwerksachse L gemessen.

Bei der Auslegung eines Verdichters 12 für ein Triebwerk 10 wird ein Seitenverhältnis V wenigstens eines vorbestimmten Laufschaufelgitters 16 bzw. wenigstens eines vorbestimmten Leitschaufelgitters 17 bzw. das Seitenverhältnis V der das jeweilige Gitter bildenden Schaufeln 20 herangezogen. Das Seitenverhältnis V ist hierbei definiert als das Verhältnis einer mittleren Höhe h zu einer mittleren Sehnenlänge S der Schaufeln 20 des jeweiligen Laufschaufelgitters 16 bzw. Leitschaufelgitters 17.

Die mittlere Schaufelhöhe h ist dabei insbesondere das arithmetische Mittel aller Schaufelhöhen h zwischen der Vorderkante 21 und der Hinterkante 22 bzw. das Integral der Erstreckung der Schaufelhöhe S im Intervall zwischen der Vorderkante 21 und der Hinterkante 22 der jeweiligen Schaufel 20. Die mittlere Sehnenlänge bzw. die mittlere Länge der Sehne S ist insbesondere das arithmetische Mittel aller Sehnenlängen S zwischen der Schaufelspitze 26 und dem Schaufelfuß 27 bzw. das Integral der Sehnenlänge S im Intervall zwischen der Schaufelspitze 26 und dem Schaufelfuß 27 der jeweiligen Schaufel 20.

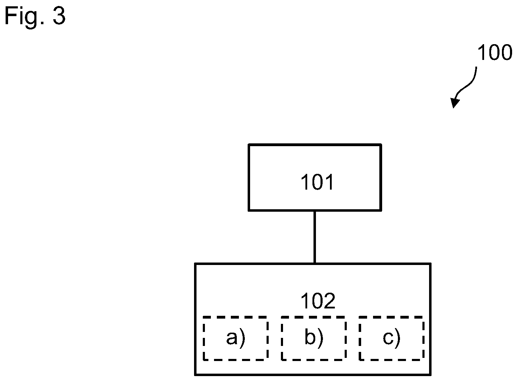

**Fig. 3** zeigt eine schematische Darstellung eines Ablaufdiagramms eines Ausführungsbeispiels eines erfindungsgemäßen Verfahrens 100 zum Auslegen eines Verdichters 12 für das Triebwerk 10 aus Fig. 1.

In einem ersten Schritt 101 wird eine Anzahl Verdichterstufen 15 bestimmt, die in dem auszulegenden Triebwerk 10 in der Strömungsrichtung R des Verdichters 12 des Triebwerks 10, insbesondere aufeinanderfolgend, anzuordnen sind. In Abhängigkeit der bestimmten Anzahl an Verdichterstufen 15 können in einem zweiten Schritt 102 die Verdichterstufen 15 anhand der hierin beschriebenen Kriterien ausgelegt werden. Diese Kriterien sind, dass a) ein Wert eines Verhältnisses zwischen dem Seitenverhältnis V des zweiten Laufschaufelgitters 16 und dem Seitenverhältnis V des vorletzten Leitschaufelgitters 17 größer als 2,0, insbesondere größer als 2,2, und weiter insbesondere größer als 2,25 ist und/oder b) ein Wert eines Verhältnisses zwischen dem Seitenverhältnis V des zweiten Laufschaufelgitters 16 und dem Seitenverhältnis V des letzten Laufschaufelgitters 16 größer als 2,0, insbesondere größer als 2,2, und weiter insbesondere größer als 2,25 ist und/oder c) ein Wert eines Verhältnisses zwischen dem Seitenverhältnis V des ersten Leitschaufelgitters 17 und dem Seitenverhältnis V des vorletzten Leitschaufelgitters 17 größer als 2,8, insbesondere größer als 3,0 und weiter insbesondere größer als 3,05 ist.

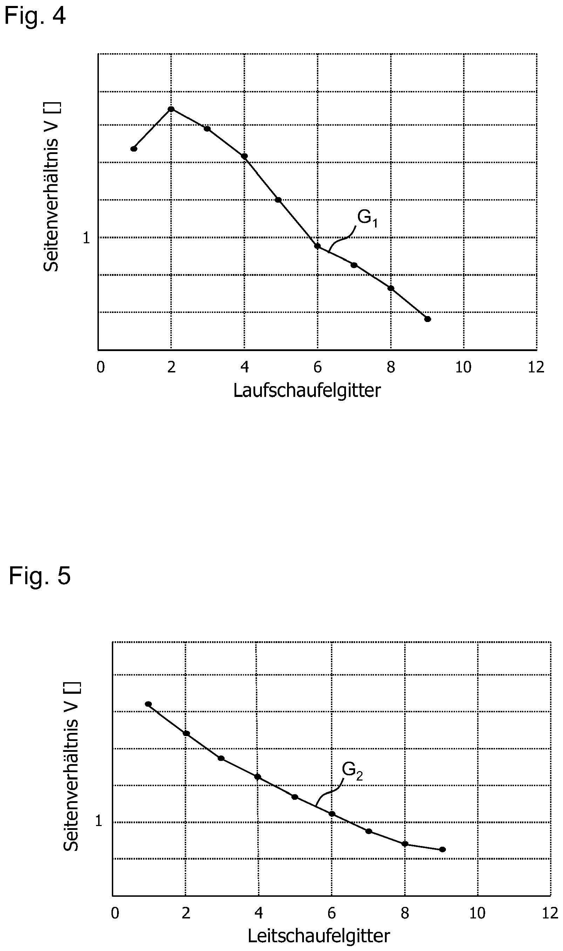

**Fig. 4** zeigt ein Diagramm eines beispielhaften Verlaufs Gi eines Seitenverhältnisses V über die Laufschaufelgitter 16 eines beispielhaften Triebwerks 10 mit einem Verdichter 12 aufweisend neun Verdichterstufen 15. Die Verdichterstufen 15 sind in Strömungsrichtung R hintereinander angeordnet und entsprechend nummeriert dargestellt. Da das Seitenverhältnis V des ersten Laufschaufelgitters 16, insbesondere bedingt durch Maßnahmen zu Verminderung von Beschädigungen durch Fremdkörper, gewöhnlich nicht frei wählbar ist, kann eine Auslegung des Seitenverhältnisses V des zweiten Laufschaufelgitters 16 und insbesondere des vorletzten und letzten Laufschaufelgitters 16 entsprechend dem vorgeschlagenen Verfahren 100 erfolgen.

Dem Verlauf Gi kann entnommen werden, dass die Seitenverhältnisse V der Verdichterstufen 15 bzw. der jeweiligen Schaufeln 20 der Laufschaufelgitter 16 ab der zweiten Verdichterstufe 15 abnehmen. Gegenüber herkömmlichen Verdichtern können insbesondere die Seitenverhältnisse V der vorderen bis mittleren Laufschaufelgitter 16, insbesondere auch der Leitschaufelgitter 17 erhöht werden. Da diese vorderen Verdichterstufen 15 gegenüber den stromabwärts angeordneten Verdichterstufen 15 geometrisch größer sind, kann durch eine Erhöhung der Seitenverhältnisse V im stromaufwärtigen Verdichterbereich eine resultierende axiale Längeneinsparung erzielt werden. Da die vorderen Verdichterstufen 15 im Teillastbetrieb des Triebwerks 10 stabilitätslimitierend wirken, werden insbesondere spaltwirbelstabilisierende Technologien eingesetzt.

**Fig. 5** zeigt ein Diagramm eines beispielhaften Verlaufs G₂ eines Seitenverhältnisses V über den Leitschaufelgittern 17 eines beispielhaften Triebwerks 10 mit einem Verdichter 12 aufweisend neun Verdichterstufen 15. Die Verdichterstufen 15 sind in Strömungsrichtung R hintereinander angeordnet und entsprechend nummeriert dargestellt.

Aus der Darstellung in Fig. 5 geht hervor, dass die Seitenverhältnisse V über die Beschaufelung des Verdichters 12 in Strömungsrichtung R abnehmen. Gegenüber bekannten Verdichtern können insbesondere die Seitenverhältnisse V der hinteren bzw. stromabwärtigen Leitschaufelgitter 17, insbesondere auch der Laufschaufelgitter 16, verringert werden. Da diese hinteren Verdichterstufen 15 gegenüber den stromaufwärts angeordneten Verdichterstufen 15 geometrisch kleiner sind, kann durch eine Verringerung der Seitenverhältnisse V im stromabwärtigen Verdichterbereich eine Stabilisierung des Verdichters 12 im Betrieb erreicht werden.

### BEZUGSZEICHENLISTE

- 10: Triebwerk
- 11: Fan
- 12: Verdichter
- 13: Brennkammer
- 14: Turbine
- 15: Verdichterstufe
- 16: Laufschaufelgitter
- 17: Leitschaufelgitter
- 18: Strömungskanal
- 20: Schaufel
- 21: Vorderkante
- 22: Hinterkante
- 23: Saugseite
- 24: Druckseite
- 25: Schaufelfuß
- 26: Schaufelspitze
- 27: Schaufelquerschnitt
- 100: Verfahren
- 101: Schritt
- 102: Schritt
- a): Kriterium
- b): Kriterium
- c): Kriterium
- h: Schaufelhöhe
- Gi: Verlauf Seitenverhältnis V
- G₂: Verlauf Seitenverhältnis V
- L: Triebwerksachse
- R: Strömungsrichtung
- S: Sehne
- V: Seitenverhältnis

## Patentansprüche

1. Verdichter (12), insbesondere Hochdruckverdichter, für ein Triebwerk (10), welcher in einer Strömungsrichtung (R) des Verdichters (12) aufeinanderfolgend angeordnete Verdichterstufen (15) aufweist und eine Verdichterstufe (15) jeweils ein Laufschaufelgitter (16) und ein stromabwärts von dem Laufschaufelgitter (16) angeordnetes Leitschaufelgitter (17) aufweist, wobei die Laufschaufelgitter (16) und die Leitschaufelgitter (17) jeweils ein Seitenverhältnis (V) einer mittleren Höhe (h) zu einer mittleren Sehnenlänge (S) einer Schaufel (20) aufweisen,
**dadurch gekennzeichnet, dass** die Verdichterstufen (15) derart ausgebildet sind, dass
a) ein Wert eines Verhältnisses zwischen dem Seitenverhältnis (V) des zweiten Laufschaufelgitters (16) und dem Seitenverhältnis (V) des vorletzten Leitschaufelgitters (17) größer als 2,0 ist und/oder
b) dass ein Wert eines Verhältnisses zwischen dem Seitenverhältnis (V) des zweiten Laufschaufelgitters (16) und dem Seitenverhältnis (V) des letzten Laufschaufelgitters (16) größer als 2,0 ist und/oder
c) dass ein Wert eines Verhältnisses zwischen dem Seitenverhältnis (V) des ersten Leitschaufelgitters (17) und dem Seitenverhältnis (V) des vorletzten Leitschaufelgitters (16) größer als 2,8 ist.

2. Verdichter (12) nach Anspruch 1, wobei der Wert eines Verhältnisses zwischen dem Seitenverhältnis (V) des zweiten Laufschaufelgitters (16) und dem Seitenverhältnis (V) des vorletzten Leitschaufelgitters (17) und/oder dass ein Wert eines Verhältnisses zwischen dem Seitenverhältnis (V) des zweiten Laufschaufelgitters (16) und dem Seitenverhältnis (V) des letzten Laufschaufelgitters (16) größer als 2,2, und insbesondere größer als 2,25 ist.

3. Verdichter (12) nach wenigstens einem der vorhergehenden Ansprüche, wobei der Wert eines Verhältnisses zwischen dem Seitenverhältnis (V) des ersten Leitschaufelgitters (17) und dem Seitenverhältnis (V) des vorletzten Leitschaufelgitters (17) größer als 3,0 und insbesondere größer als 3,05 ist.

4. Verdichter (12) nach wenigstens einem der vorhergehenden Ansprüche, wobei der Verdichter mehr als 6, insbesondere mindestens 8, in einer Strömungsrichtung (R) des Verdichters (12) aufeinanderfolgend angeordnete Verdichterstufen (15) aufweist.

5. Verdichter (12) nach wenigstens einem der vorhergehenden Ansprüche, wobei das Seitenverhältnis (V) des ersten Laufschaufelgitters (17) kleiner als das des zweiten Laufschaufelgitters, insbesondere kleiner als das des zweiten und des dritten Laufschaufelgitters, ist.

6. Verfahren (100) zum Auslegen eines Verdichters (12) für ein Triebwerk (10), wobei der Verdichter (12) in einer Strömungsrichtung (R) des Verdichters (12) aufeinanderfolgend angeordnete Verdichterstufen (15) aufweist und eine Verdichterstufe (15) jeweils ein Laufschaufelgitter (16) und ein stromabwärts von dem Laufschaufelgitter (16) angeordnetes Leitschaufelgitter (17) aufweist und die Laufschaufelgitter (16) und die Leitschaufelgitter (17) jeweils ein Seitenverhältnis (V) einer mittleren Höhe (h) zu einer mittleren Sehnenlänge (S) einer Schaufel (20) aufweisen,
**dadurch gekennzeichnet, dass** die Verdichterstufen (15) derart ausgelegt werden, dass
a) ein Wert eines Verhältnisses zwischen dem Seitenverhältnis (V) des zweiten Laufschaufelgitters (16) und dem Seitenverhältnis (V) des vorletzten Leitschaufelgitters (17) größer als 2,0 ist und/oder
b) dass ein Wert eines Verhältnisses zwischen dem Seitenverhältnis (V) des zweiten Laufschaufelgitters (16) und dem Seitenverhältnis (V) des letzten Laufschaufelgitters (16) größer als 2,0 ist und/oder
c) dass ein Wert eines Verhältnisses zwischen dem Seitenverhältnis (V) des ersten Leitschaufelgitters (17) und dem Seitenverhältnis (V) des vorletzten Leitschaufelgitters (16) größer als 2,8 ist.
